# EUROPEAN PATENT SPECIFICATION

(11) **EP 2 151 263 B1**
(45) Date of publication and mention of the grant of the patent: **05.03.2014**
(21) Application number: 08161735.9
(22) Date of filing: 04.08.2008
(51) Int. Cl.: A62B 7/02, A62B 7/14, B64D 11/00

(54) **Cockpit oxygen breathing device**
Cockpit-Sauerstoffversorgungseinheit
Dispositif de respiration d'oxygène dans un cockpit

(43) Date of publication of application: 10.02.2010
(73) Proprietor: INTERTECHNIQUE, 78373 Plaisir Cédex (FR)
(72) Inventor: Rittner, Wolfgang, 23623, Siblin (DE); Meckes, Rüdiger, 23919, Berkenthin (DE)
(74) Representative: Eisenführ Speiser

(56) References cited:
- GB-A- 2 249 728
- US-A1- 2004 000 312
- US-A1- 2004 245 390

## Description

The invention relates to an oxygen breathing device, in particular for cockpit crew member of an aircraft, comprising:
- a pressurized oxygen source for storing pressurized oxygen,
- an oxygen mask, adapted to fit to nose and mouth of a person to be supplied with oxygen from the pressurized oxygen source,
- an oxygen supply line connecting the pressurized oxygen source with the oxygen mask,
- a pressure regulator / safety valve coupled in the oxygen supply line to selectively open or shut off oxygen flow from the pressurized oxygen source to the oxygen mask and/or to control pressure of said oxygen supplied to the oxygen mask.
- a pneumatic seal (11) adapted to pneumatically seal the pressurized oxygen source in a non-use condition,
- an opening device (20) adapted to open the pneumatic seal in case of an emergency situation requiring oxygen supply to the person,
- a change over valve (50) adapted to selectively supply oxygen from the pressurized oxygen source or pressurized air from a pressurized air source (53) to the oxygen mask.

A further aspect of the invention is a method for providing oxygen to a passenger or crew member of an aircraft.

Oxygen breathing devices of the aforementioned type are used to provide oxygen to a crew member or passenger in an emergency situation. Examples are US 2004/000 312 A1, GB-A-2 249 728, and US 2004/245 390 A1. A particular application of oxygen breathing devices is the supply of oxygen to a crew member in a cockpit of an aircraft. In such applications of oxygen breathing devices in a cockpit use it is known to provide an oxygen source like a pressurized oxygen in a tank and to provide oxygen from such source to the cockpit member in an emergency situation.

To make sure that the oxygen breathing device is in proper condition to provide oxygen to the pilot it is required and prescribed to perform a pre-flight check of the oxygen breathing device. In such pre-flight check in particular the valves and the breathing mask worn by the pilot are checked for proper function by providing oxygen from the oxygen source.

Such pre-flight check is performed before each flight of an aircraft and after a certain number of pre-flight checks it is required to replace the pressurized oxygen source since the oxygen stored therein is no longer sufficient to provide oxygen for a period of time corresponding to an emergency situation. Thus, a first drawback of such existing oxygen breathing devices is the need to frequently replace the pressurized oxygen source, thus producing enhanced costs in the maintenance of the whole oxygen breathing device.

Still further, in existing oxygen breathing devices it is required to permanently provide pressurized oxygen to a valve member which can be activated to perform pre-flight check or in an emergency situation. However, a small amount of oxygen may flow through such a valve, thus resulting in a permanent loss of oxygen to a small amount. This permanent loss will slowly reduce the volume of oxygen stored in the pressurized oxygen source and thus will further require replacement of the pressurized oxygen source after a certain period of time, even if no pre-flight check has been performed.

Still further, while it is usually preferred to provide oxygen to crew member or passenger in emergency situations like a decompression of the aircraft, it is less preferable to provide oxygen in emergency situations like smoke or fire in the cockpit or aircraft. In such situations, the use of oxygen will increase the risk of burn injuries to the face of the crew member or passenger using the oxygen breathing device due to an increased concentration of oxygen in the area surrounding the face of the crew member or passenger. Thus, there is a need for an oxygen breathing device reducing the risk of burn injuries of the crew member or passenger using the device.

It is a first object of the invention to provide an oxygen breathing device reducing the need to frequently replace the pressurized oxygen source.

It is a further object of the invention to provide an oxygen breathing device reducing the risk of burn damages to the crew member or passenger using the device in case of particular emergency situations.

These and other objects of the invention are achieved by providing an oxygen breathing device as described in claim 1.

Although a pneumatically sealed pressurized oxygen source is provided, the functionality of performing a pre-flight check of the oxygen breathing device is not sacrificed in the oxygen breathing device according to the invention. For this purpose, a pressurized air source is provided in the oxygen breathing device which serves to perform a pre-flight check. A change over valve is arranged in the oxygen breathing device to selectively direct air from the pressurized air source through the tubes, pipes, valves, straps of the oxygen mask and any other devices related to the oxygen breathing device coupled in the flow path of the oxygen to the mask providing the oxygen to the passenger or crew member. Using this pressurized air allows to perform a pre-flight check. In case of an emergency situation, the change over valve may switch over to provide oxygen from the pressurized oxygen source to the oxygen breathing mask providing the oxygen to the passenger or crew member.

It is to be understood that according to this description and the claims a non-use condition is defined to be a condition wherein no emergency is present. Thus, a pre-flight check condition is to be understood as a non-use condition although the oxygen breathing device may be used during pre-flight check for a short period of time. Thus, the pressurized oxygen source remains pneumatically sealed during a pre-flight check and the seal is only broken in case of an emergency situation.

For opening the seal, the oxygen breathing device according to the invention comprises an opening device which can be a tube or the like having a sharp tip for perforating the seal and thus starting the flow of oxygen out of the pressurized oxygen source. The opening device may be manually or automatically activated and may comprise an actuating device like a pneumatically activated piston, an electromagnetic actuator or the like to move a member perforating the seal or to remove the seal itself. The seal may be a membrane or the like.

It is to be understood that the oxygen is supplied to the person using the device via the oxygen mask fitted to the mouth and nose region of the person, respectively. In the context of the description and the claims an oxygen mask is primarily a mask used by a crew member in the cockpit of an aircraft but this does not exclude that such an oxygen mask is provided to any other crew member or to a passenger in the passenger space of such an aircraft as well.

It is to be understood that the pressurized air or oxygen provided to the oxygen mask may not only serve to be inhaled by the person wearing the oxygen mask but to additionally provide for other functions like setting inflatable straps or the like under pressure for securely fixing the oxygen mask to mouth and nose of the person using the oxygen mask or any other function related to oxygen supply to the person in an emergency situation.

According to a first preferred embodiment, a control unit is provided which is adapted to receive pre-flight check signal by a user of the oxygen breathing device and to activate the change over valve upon receipt of said preflight check signal to switch into a condition wherein pressurized air is provided to the oxygen mask. Such a control unit will facilitate to perform a pre-flight check by doing the required steps upon receipt of one single signal and hereafter setting the oxygen breathing device into a condition where pressurized air is provided to the oxygen mask. According to the invention, the oxygen breathing device according to the invention is adapted to automatically provide pressurized air in a particular emergency situation signalized by a particular emergency signal. As described beforehand, in particular in case of smoke or fire in the aircraft it may be preferable to not provide pure oxygen to the person using the device since this will result in an increased risk of burn injuries to the face of the person. According to this preferred embodiment, the pressurized air source is not only used to perform pre-flight check but is further used to provide pressurized air to the person using the device in such specific emergency situations. Thus, a significant advantage is provided in that the oxygen breathing device according to the invention is capable to provide pure oxygen to the person using the device in emergency situations like a decompression situation and to alternatively provide pressurized air in specific emergency situations like smoke or fire in the cockpit or another region of the aircraft.

According to a further preferred embodiment, a control unit is provided adapted to receive an emergency decompression signal, in particular an emergency decompression signal provided manually by a crew member of an aircraft or automatically by a cabin pressure sensor and to activate upon receipt of said emergency decompression signal said opening device to open said seal of said pressurized oxygen source. The control unit according to this preferred embodiment may be a separate device or may be integrated into the control unit according to the foregoing preferred embodiment. According to this preferred embodiment, the oxygen breathing device is adapted to be automatically activated to provide oxygen to the person using the device in case of a decompression situation. The decompression situation may be signalized manually by a crew member to provide such emergency decompression signal or may be generated automatically by a sensor which measures the cabin pressure and compares this pressure to a desired range of pressure.

According to a further preferred embodiment, the oxygen breathing device comprises a control unit adapted to receive emergency signal by a user or a sensor, in particular a smoke detector or a fire detector, wherein the control unit is adapted to activate said changeover upon receipt of said emergency signal to switch into a condition wherein pressurized air is provided to the oxygen mask.

According to a further preferred embodiment, the pressurized air source is provided by a pressurized air cylinder, a bleed air supply line, an On-Board-Oxygen-Generator- System, an On-Board-Inert Gas-Generator- System or a compressor filter stage. According to this preferred embodiment, the oxygen breathing device may comprise an integrated pressurized air cylinder to thus constitute a highly integrated device which is independent from external pressurized air sources. Alternatively, the pressurized air may be provided by external sources like a bleed air supply line providing bleed air from a turbine driving the aircraft, an OBOGS, an OBIGGS, and any other air compressing device provided onboard of the aircraft or by an external supply unit coupled to the aircraft in a ground condition or by a compressor filter stage. In particular in those embodiments where the pressurized air is used to supply air to the person using the device it is preferred to receive pressurized air from an onboard system or a pressurized air tank integrated into the oxygen breathing device, since this will allow to sufficiently supply the person with pressurized in particular emergency situations. However, it is to be understood that in case that the pressurized air is only for pre-flight check of the system, the pressurized air may alternatively be provided by an external device coupled to the aircraft in ground condition.

According to a still further preferred embodiment, a control unit is provided adapted to receive a signal from a pressure sensor for detecting the flight altitude of an aircraft equipped with said oxygen breathing device, the control unit being adapted to only allow activation of said change over valve if said signal of said pressure sensor signalises that the aircraft has reached or exceeded a certain altitude. According to this embodiment, it is ensured that the oxygen breathing device is only activated if the aircraft has reached or exceeded a certain altitude and thus the system cannot be inadvertently activated in a ground condition or at low altitudes. This embodiment may be improved in such a way that in ground condition or at low altitudes, where the signal is not present, only the pressurized air may be provided to the oxygen masks while at higher altitudes, if the signal of the altitude sensor is present, the seal of the pressurized oxygen source may be broken and pure oxygen flow to the oxygen mask may be activated by this.

According to a still further embodiment, a purge valve is arranged in the oxygen supply line between the changeover valve and the oxygen mask, wherein the purge valve is adapted to switch from a first condition wherein oxygen supplied via the oxygen supply line is provided to said oxygen mask into a second condition wherein oxygen supplied via the oxygen supply line is provided to a purge line. This embodiment specifically addresses the condition present in the oxygen breathing device after a pre-flight check with pressurized air and provides for pure oxygen supply to the person using the device in case of an emergency situation like a decompression situation. Since in such case, following the flow of air through the tubes, pipes and valves of the device, air is present in the device and would be supplied to the person using the device in the first phase of the emergency supply, this can be overcome by providing such purge valve for quickly purging the system with pure oxygen from the pressurized oxygen source and thus eliminate the air present in the system following pre-flight check. This will allow to immediately provide pure oxygen to the person using the device and is a particular advantage in specific emergency conditions.

In said preferred embodiment it is further preferred to provide a control unit adapted to activate said purge valve to direct gas provided via the oxygen supply line to said purge line. Said control unit according to this preferred embodiment may be a separate device or may be integrated into a control unit as described before of any of the preferred embodiments described before. The control unit will allow to automatically purge the system with pure oxygen in case of an emergency situation for a short, predetermined period of time and will hereafter automatically switch back to regular use condition wherein oxygen from the pressurized oxygen source is provided to the person using the device.

According to a further preferred embodiment of the oxygen breathing device according to the invention, a control unit is provided which is adapted to receive an emergency decompression signal and upon receipt of said emergency decompression signal to activate simultaneously said opening device to open said seal of said pressurized oxygen source, said changeover valve to switch into a condition wherein oxygen provided by said oxygen supply line is provided to said oxygen mask and said purge valve to provide a gas provided to the purge valve to the purge line, whereby the control unit is further adapted to switch back said purge valve after a predetermined time period into a condition, wherein gas provided to the purge valve is provided to said oxygen mask.

According to this preferred embodiment, the control unit is provided to automatically break the seal of the pressurized oxygen source in case of an emergency decompression situation by activating the opening device and to provide said oxygen from the pressurized oxygen source in a first short period of time to purge the system with pure oxygen and to hereafter switch over into a condition, wherein pure oxygen is provided to the oxygen mask.

According to a final preferred embodiment the oxygen is stored in a sealed pressurized oxygen source and in case of an emergency said seal of said oxygen source is opened and oxygen is provided to said passenger or crew member via an oxygen mask. This will allow that oxygen flow to the oxygen mask is activated by a trigger signal generated automatically when the oxygen mask is taken from a box or hook. Such trigger signal may be transferred via a control unit as described beforehand. In particular, such automatic activation may be combined with an altitude sensor in such a way that automatic oxygen flow may only be activated in high altitudes.

According to a further aspect of the invention, a method for providing oxygen to a passenger or crew member of an aircraft is provided, as described in claim 11.

The method may be improved in that pressurized air from a pressurized air source is provided to said oxygen mask in a pre-flight check. This will allow to retain the seal undamaged but to nevertheless perform pre-flight check for checking of substantial elements of the breathing device for proper functioning, using the pressurized air from the pressurized air source.

Still further it is preferred that the seal of the pressurized oxygen source is automatically opened by an opening device upon receipt of an emergency decompression signal. This will allow for immediate and automatic supply of oxygen to the person using the device in case of an emergency situation like and emergency signal detected by a pressure sensor of measuring the pressure inside the cabin of a pressurized cabin aircraft.

According to a final preferred embodiment, the method according to the invention may be improved in that an oxygen supply line providing oxygen from the pressurized oxygen source to the oxygen mask is purged with oxygen for a predetermined period of time after the seal of the pressurized oxygen source was opened. This purging will eliminate air inside the oxygen breathing device following pre-flight check with pressurized air and to thus allow to immediately supply pure oxygen to the person using the device in an emergency situation.

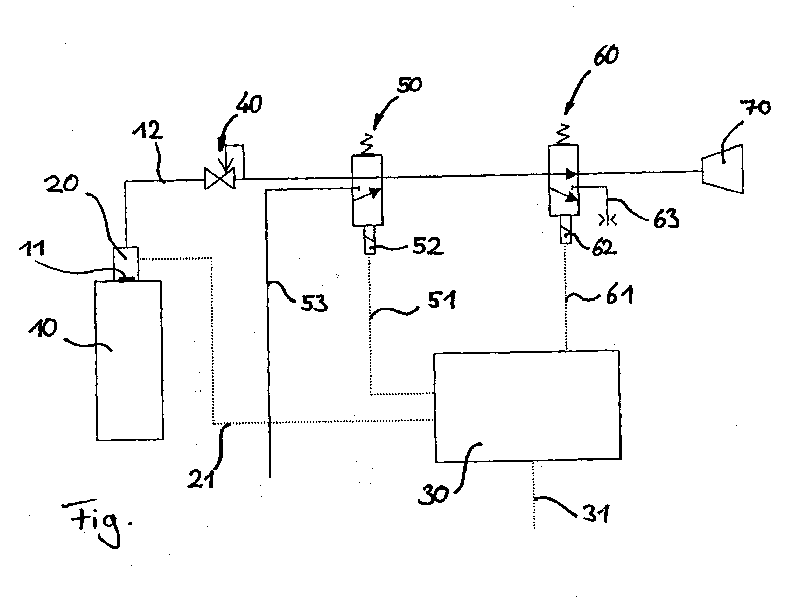

A preferred embodiment of the invention is described with reference to the accompanying figure. The figure shows a schematic set-up of an oxygen breathing device according to the invention.

As shown in the figure, a sealed pressurized oxygen cylinder 10 is provided, comprising pressurized oxygen and being sealed by a seal 11.

An opening device 20 is directly attached to the pressurized oxygen cylinder 10 in the region of the seal 11 and is coupled to a control unit 30 via an opening control line 21.

Oxygen provided by the pressurized oxygen cylinder 10 after the seal 11 has been opened by the opening device 20 supplied via an oxygen supply line 12 to a pressure regulator with safety valve 40. From this pressure regulator with safety valve 40 the oxygen is further supplied to a change over valve 50 which is adapted to selectively provide said oxygen from the pressurized oxygen cylinder 10 to a purge valve 60 or to provide pressurized air supplied to the change over valve 50 via a pressurized air supply line 53 to the purge valve 60.

The pressurized air supply line may be coupled to a clean ECS, a bleed air supply, an OBIGGS or an OBOGS system, a cabin air blower with smoke filter or an pressurized cylinder integrated into the oxygen breathing device to provide pressurized air to the change over valve 50.

The change over valve 50 is coupled to the control unit 30 via a change over valve control line 51.

As can be seen in the schematic figure, the change over valve 50 is spring-biased into a condition wherein oxygen from the pressurized oxygen cylinder 10 is provided to the purge valve 60. An actuator 52 integrated into the change over valve 50 can be activated by the control unit 30 via the change over valve control line 51 to switch the change over valve into a condition wherein pressurized air from the pressurized air supply line 53 is provided to the purge valve 60.

The purge valve 60 is spring-biased into a condition wherein the oxygen or pressurized air supplied to the purge valve 60 is provided to a oxygen mask 70. The purge valve 60 is coupled to the control unit 30 via a purge valve control line 61 and a signal provided via said purge valve control line 61 will activate an actuator 62 integrated into the purge valve to switch the purge valve into a condition wherein the oxygen or pressurized air supplied to the purge valve 60 is provided to a purge line 63 to purge the system. It is to be understood that preferably the purge valve 60 is only switched into said condition if pure oxygen is supplied to the purge valve in order to supply the oxygen breathing device with pure oxygen in case of an emergency decompression situation.

The oxygen mask 70 is adapted to fit over mouth and nose of a crew member using the oxygen breathing device and to provide said crew member with oxygen or pressurized air in an emergency situation.

As can be further seen from the figure, the control unit 30 is coupled to a centralized aircraft control system via a control line 31. Said control line 31 may in particular provide an aircraft altitude switch signal to signalize the altitude of the aircraft to the control unit and may additionally provide a manual oxygen selector switch signal to manually activate oxygen supply from the oxygen breathing device according to the invention.

The oxygen breathing device will preferably work according to the following steps:
In a pre-flight check for checking proper functioning of the breath control and the extendable and inflatable straps of the oxygen mask 70, pressurized air will be provided to the oxygen mask via supply line 53. Further, in case of smoke in the cockpit without having a decompression situation at the same time, pressurized air will be supplied to the oxygen mask as well. Such pressurized air will be received as filtered bleed air from the turbines driving the aircraft or from any other pressurized air onboard of the aircraft or any external device for pre-flight check.

In case of a decompression emergency situation, with or without smoke in the cockpit, pure oxygen from the pressurized oxygen cylinder 10 will be provided to the oxygen mask via supply line 12.

The seal 11 of the pressurized oxygen cylinder may be provided by a membrane or the like which can be perforated in case of an emergency situation.

The electronic control unit 30 receives an activating signal via control line 31 in case of a decompression situation and if the altitude switch sensor is activated to signalize a certain minimum flight level of the aircraft or if the control line was manually activated by the cockpit crew.

The opening device 20 will perforate the membrane 11 if the electronic control unit 30 was activated via control line 31. At the same time, the change over valve 50 will be switched by a signal provided via change over control line 51 into a condition where oxygen is allowed to flow through the change over valve 50 to the purge valve 60.

In order to purge the system with pure oxygen from the pressurized oxygen cylinder, the purge valve 60 is activated to purge the system with pure oxygen by the purge line 63 for a short period of time, so that lines being in flow direction before the purge valve can be filled with pure oxygen.

After said short period of time the purge valve 60 is closed and the pure oxygen is supplied to the oxygen mask 70. The pilot using the oxygen mask can now breathe pure oxygen.

In case that no decompression emergency situation is present or the cockpit oxygen breathing device was not activated by cabin crew or cockpit crew, the electronic control unit 30 will activate the change over valve 50 via change over control line 51 in such a condition that filtered bleed air is supplied to the oxygen breathing device. The purge valve 60 will in such case direct said pressurized air into the oxygen mask 70. In this condition, the mask can be used for a pre-flight check, i.e. the pilot can check whether inflatable mask straps and the breath control integrated into the oxygen mask is properly functioning.

Further, the pilot can use the oxygen mask in this condition if smoke is present in the cockpit to be protected from aggressive smoke or gases. In said both use conditions the oxygen from the pressurized oxygen cylinder is not required and thus does not have to be renewed or replaced. In case of fire in the cockpit, the security of the pilots is significantly increased since the pilot is not supplied with pure oxygen and thus no gases feeding the fire will be present in the region surrounding the face of the pilot.

## Claims

1. Oxygen breathing device, in particular for cockpit crew member of an aircraft, comprising:
- a pressurized oxygen source (10) for storing pressurized oxygen,
- an oxygen mask (70), adapted to fit to nose and mouth of a person to be supplied with oxygen from the pressurized oxygen source,
- an oxygen supply line (12) connecting the pressurized oxygen source with the oxygen mask,
- a pressure regulator / safety valve (40) coupled in the oxygen supply line to selectively open or shut off oxygen flow from the pressurized oxygen source to the oxygen mask and/or to control pressure of said oxygen supplied to the oxygen mask,
- a pneumatic seal (11) adapted to pneumatically seal the pressurized oxygen source in a non-use condition,
- an opening device (20) adapted to open the pneumatic seal in case of an emergency situation requiring oxygen supply to the person,
- a change over valve (50) adapted to selectively supply oxygen from the pressurized oxygen source or pressurized air from a pressurized air source (53) to the oxygen mask,
**characterized by** a control unit (30) adapted to receive an emergency signal by a user or a sensor, in particular a smoke detector or a fire detector, wherein the control unit is adapted to activate said change over valve (50) upon receipt of said emergency signal to switch into a condition wherein pressurized air is provided to the oxygen mask.

2. Oxygen breathing device according to claim 1,
**characterized by** a control unit (30) adapted to receive preflight check signal by a user of the oxygen breathing device and to activate the change over valve (50) upon receipt of said preflight check signal to switch into a condition wherein pressurized air is provided to the oxygen mask.

3. Oxygen breathing device according to claim 1 or 2,
**characterized by** a control unit (30) adapted to receive an emergency decompression signal, in particular an emergency decompression signal provided manually by a crew member of an aircraft or automatically by a cabin pressure sensor and to activate upon receipt of said emergency decompression signal said opening device (20) to open said seal of said pressurized oxygen source.

4. Oxygen breathing device according to any of the preceding claims,
**characterized in that** the pressurized air source (53) is provided by a pressurized air cylinder, a bleed air supply line (53), an On-Board-Oxygen-Generator- System, an On-Board-Inert Gas-Generator- System or a compressor filter stage.

5. Oxygen breathing device according to any of the preceding claims,
**characterized by** a control unit (30) adapted to receive a signal from a pressure sensor for detecting the flight altitude of an aircraft equipped with said oxygen breathing device, the control unit being adapted to only allow activation said change over valve (50) if said signal of said pressure sensor signalises that the aircraft has reached or exceeded a certain altitude.

6. Oxygen breathing device according to any of the preceding claims,
**characterized by** a purge valve (60) arranged in the oxygen supply line between the changeover valve (50) and the oxygen mask (70), wherein the purge valve is adapted to switch from a first condition wherein oxygen supplied via the oxygen supply line is provided to said oxygen mask into a second condition wherein oxygen supplied via the oxygen supply line is provided to a purge line (63).

7. Oxygen breathing device according to the preceding claim,
**characterized by** a control unit adapted to activate said purge valve (60) to direct gas provided via the oxygen supply line to said purge line (63).

8. Oxygen breathing device according to any of the preceding claims,
**characterized by** a control unit (30) adapted to receive an emergency decompression signal and upon receipt of said emergency decompression signal to activate simultaneously said opening device (20) to open said seal (11) of said pressurized oxygen source (10), said changeover valve (50) to switch into a condition wherein oxygen provided by said oxygen supply line is provided to said oxygen mask (70) and said purge valve (60) to provide a gas provided to the purge valve to the purge line, whereby the control unit (30) is further adapted to switch back said purge valve (60) after a predetermined time period into a condition, wherein gas provided to the purge valve is provided to said oxygen mask.

9. Oxygen breathing device according to any of the preceding claims.
**characterized in that** the oxygen mask is stored in a box or on a hook, said box or hook being associated to a switch generating a trigger signal to activate oxygen flow if the oxygen mask is taken from the box or hook.

10. Method for providing oxygen to a passenger or crew member of an aircraft,
wherein the oxygen is stored In a sealed pressurized oxygen source and in case of an emergency said seal of said oxygen source is opened and oxygen is provided to said passenger or crew member via an oxygen mask.
**characterized in that** upon receipt of an emergency signal by a user or a sensor, in particular a smoke detector or a fire detector, pressurized air is provided to the oxygen mask.

11. Method according to claim 10,
**characterized in that** pressurized air from a pressurized air source is provided to said oxygen mask in a preflight check.

12. Method according to claim 10 or 11,
**characterized in that** the seal of the pressurized oxygen source is automatically opened by an opening device upon receipt of an emergency decompression signal.

13. Method according to any of the claims 10 to 12,
**characterized in that** an oxygen supply line providing oxygen from the pressurized oxygen source to the oxygen mask is purged with oxygen for a predetermined period of time after the seal of the pressurized oxygen source was opened.

14. Method according to any of the claims 10 to 13,
**characterized in that** oxygen flow to the oxygen mask is activated by a trigger signal generated automatically when the oxygen mask is taken from a box or hook.

## Patentansprüche

1. Sauerstoffatemgerät, insbesondere für Cockpitbesatzungsmitglieder eines Flugzeugs, umfassend:
- eine unter Druck stehende Sauerstoffquelle (10) zum Aufbewahren von unter Druck stehendem Sauerstoff,
- eine Sauerstoffmaske (70), die ausgebildet ist auf Nase und Mund einer Person zu passen, wobei die Sauerstoffmaske mit Sauerstoff von der unter Druck stehenden Sauerstoffquelle versorgt wird,
- eine Sauerstoffversorgungsleitung (12), die die unter Druck stehende Sauerstoffquelle mit der Sauerstoffmaske verbindet,
- einen Druckregler mit Sicherheitsventil (40) eingekoppelt in die Sauerstoffversorgungsleitung um Sauerstoffdurchfluss von der unter Druck stehenden Sauerstoffquelle zu der Sauerstoffmaske selektiv zu öffnen oder zu schließen und/oder um Druck des besagten Sauerstoffs zu kontrollieren, der an die Sauerstoffmaske geliefert wird,
- eine pneumatische Abdichtung (11), die ausgeführt ist, die unter Druck stehende Sauerstoffquelle in einem Zustand der Nichtbenutzung pneumatisch abzudichten,
- eine Öffnungseinrichtung (20), die ausgebildet ist, die pneumatische Dichtung im Falle einer Notfallsituation zu öffnen, welche eine Sauerstoffversorgung für eine Person erfordert,
- ein Umschaltventil (50), das ausgebildet ist, die Sauerstoffmaske selektiv mit Sauerstoff von der unter Druck stehenden Sauerstoffquelle oder mit Druckluft von einer Druckluftquelle (53) zu versorgen, **gekennzeichnet durch** eine Kontrolleinheit (30), die ausgebildet ist, ein Notfallsignal von einem Nutzer oder von einem Sensor zu empfangen, insbesondere von einem Rauchdetektor oder einem Feuerdetektor, wobei die Kontrolleinheit ausgebildet ist, nach Erhalt des besagten Notrufsignals besagtes Umschaltventil (50) zu aktivieren, um es in einen Zustand zu überführen, worin Druckluft für die Sauerstoffmaske zur Verfügung gestellt wird.

2. Sauerstoffatemgerät nach Anspruch 1,
**gekennzeichnet durch** eine Kontrolleinheit (30), die ausgebildet ist, ein Vorflugkontrollsignal (preflight check signal) von einem Nutzer des Sauerstoffatemgeräts zu empfangen und nach Erhalt des besagten Vorflugkontrollsignals das Umschaltventil (50) zu aktivieren, um es in einen Zustand zu überführen, worin Druckluft für die Sauerstoffmaske zur Verfügung gestellt wird.

3. Sauerstoffatemgerät nach Anspruch 1 oder 2,
**gekennzeichnet durch** eine Kontrolleinheit (30), die ausgebildet ist, ein Notfalldekompressionssignal zu erhalten, insbesondere ein Notfalldekompressionssignal, das manuell von einem Besatzungsmitglied eines Flugzeugs oder automatisch von einem Kabinendrucksensor zur Verfügung gestellt wird und besagte Öffnungsvorrichtung (20) nach Erhalt des besagten Notfalldekompressionssignals zu aktivieren, um besagte Dichtung der unter Druck stehenden Sauerstoffquelle zu öffnen.

4. Sauerstoffatemgerät nach einem der vorhergehenden Ansprüche,
**dadurch gekennzeichnet, dass** die unter Druck stehende Luftquelle (53) von einem Druckluftzylinder, einer Zapfluftversorgungsleitung (53), einem Bord eigenen Sauerstoffgeneratorsystem, einem Bord eigenen Inertgasgeneratorsystem oder einer Kompressorfilterstufe zur Verfügung gestellt wird.

5. Sauerstoffatemgerät nach einem der vorhergehenden Ansprüche, **gekennzeichnet durch** eine Kontrolleinheit (30), die ausgebildet ist ein Signal von einem Drucksensor zu erhalten, der die Flughöhe eines mit dem besagten Sauerstoffatemgerät ausgestatteten Flugzeugs detektiert, wobei die Kontrolleinheit ausgebildet ist, das besagte Umschaltventil (50) nur dann zu aktivieren, wenn besagtes Signal des besagten Drucksensors anzeigt, dass das Flugzeug eine bestimmte Höhe erreicht oder überschritten hat.

6. Sauerstoffatemgerät nach einem der vorhergehenden Ansprüche,
**gekennzeichnet durch** ein Absaugventil (60), das in der Sauerstoffversorgungsleitung zwischen dem Umschaltventil (50) und der Sauerstoffmaske (70) angeordnet ist, wobei das Absaugventil ausgebildet ist, von einem ersten Zustand, in dem über die Sauerstoffleitung gelieferter Sauerstoff der Sauerstoffmaske zur Verfügung gestellt wird, in einen zweiten Zustand zu wechseln, in dem über die Sauerstoffleitung gelieferter Sauerstoff einer Absaugleitung (63) zur Verfügung gestellt wird.

7. Sauerstoffatemgerät nach dem vorhergehenden Anspruch,
**gekennzeichnet durch** eine Kontrolleinheit, die ausgebildete ist besagtes Absaugventil (60) zu aktivieren, um Gas zur Absaugleitung (63) zu führen, welches über die Sauerstoffleitung zur Verfügung gestellt wird.

8. Sauerstoffatemgerät nach einem der vorhergehenden Ansprüche,
**gekennzeichnet durch** eine Kontrolleinheit (30), die ausgebildet ist, ein Notfalldekompressionssignal zu erhalten und nach Erhalt des besagten Notfalldekompressionssignals besagte Öffnungsvorrichtung (20), um besagte Dichtung (11) der besagten Sauerstoffquelle (10) zu öffnen, besagtes Umschaltventil (50), um in einen Zustand zu wechseln, worin Sauerstoff, der über die Sauerstoffleitung geliefert wird, der Sauerstoffmaske (70) zur Verfügung gestellt wird und besagtes Absaugventil (60), um ein Gas, das dem Absaugventil zur Verfügung gestellt wird, der Absaugleitung zur Verfügung zu stellen, simultan aktiviert, wobei die Kontrolleinheit (30) weiterhin ausgebildet ist, besagtes Absaugventil (60) nach einer vorbestimmten Zeitdauer in einen Zustand zurück zu überführen, worin Gas, das dem Absaugventil zur Verfügung gestellt wird, besagter Sauerstoffmaske zur Verfügung gestellt wird.

9. Sauerstoffatemgerät nach einem der vorhergehenden Ansprüche,
**dadurch gekennzeichnet, dass** die Sauerstoffmaske in einem Kasten oder an einem Haken aufbewahrt ist, wobei besagter Kasten oder Haken mit einem Schalter in Verbindung steht, der ein Steuersignal auslöst, um Sauerstofffluss zu aktivieren, wenn die Sauerstoffmaske aus dem Kasten oder von dem Haken genommen wird.

10. Verfahren zur Bereitstellung von Sauerstoff für einen Passagier oder Besatzungsmitglied eines Flugzeugs,
worin der Sauerstoff in einer abgedichteten, unter Druck stehenden Sauerstoffquelle aufbewahrt wird und im Falle eines Notfalls besagte Dichtung der besagten Sauerstoffquelle geöffnet wird und Sauerstoff für besagten Passagier oder besagtes Besatzungsmitglied über eine Sauerstoffmaske bereitgestellt wird,
**dadurch gekennzeichnet, dass** nach Erhalt eines Noffallsignal von einem Nutzer oder einem Sensor, insbesondere einem Rauchdetektor oder einem Feuerdetektor, Druckluft für die Sauerstoffmaske bereitgestellt wird.

11. Verfahren nach Anspruch 10,
**dadurch gekennzeichnet, dass** Druckluft von einer Druckluftquelle für besagte Sauerstoffmaske in einer Vorflugkontrolle (preflight check) bereitgestellt wird.

12. Verfahren nach Anspruch 10 oder 11,
**dadurch gekennzeichnet, dass** die Dichtung der unter Druck stehenden Sauerstoffquelle nach Erhalt eines Notfalldekompressionssignals automatisch von einem Öffnungsgerät geöffnet wird.

13. Verfahren nach einem der Ansprüche 10-12, **dadurch gekennzeichnet, dass** eine Sauerstoffversorgungsleitung, die Sauerstoff von der unter Druck stehenden Sauerstoffquelle für die Sauerstoffmaske bereitstellt, für eine vorbestimmte Zeitdauer mit Sauerstoff gespült wird, nachdem die Dichtung der unter Druck stehenden Sauerstoffquelle geöffnet wurde.

14. Verfahren nach einem der Ansprüche 10-13,
**dadurch gekennzeichnet, dass** Sauerstofffluss zu der Sauerstoffmaske durch ein Steuersignal aktiviert wird, das automatisch generiert wird, wenn die Sauerstoffmaske aus einem Kasten oder von einem Haken genommen wird.

## Revendications

1. Dispositif de respiration d'oxygène, en particulier pour un membre d'équipage du cockpit d'un aéronef, comprenant :
- une source d'oxygène pressurisé (10) destinée au stockage de l'oxygène pressurisé,
- un masque à oxygène (70) adapté pour s'adapter au nez et à la bouche d'une personne à alimenter en oxygène par la source d'oxygène pressurisé,
- une ligne d'alimentation en oxygène (12) reliant la source d'oxygène pressurisé au masque à oxygène,
- un régulateur de pression / une soupape de sécurité (40) couplée dans la ligne d'alimentation en oxygène pour ouvrir ou fermer de manière sélective le flux d'oxygène de la source d'oxygène pressurisé au masque à oxygène et/ou pour commander la pression dudit oxygène fourni au masque à oxygène,
- un joint pneumatique (11) adapté pour rendre étanche de manière pneumatique la source d'oxygène pressurisé dans un état de non utilisation,
- un dispositif d'ouverture (20) adapté pour ouvrir le joint pneumatique en cas de situation d'urgence requérant l'alimentation en oxygène de la personne,
- une soupape de commutation (50) adaptée pour fournir de manière sélective de l'oxygène de la source d'oxygène pressurisé ou de l'air pressurisé d'une source d'air pressurisé (53) au masque à oxygène,
**caractérisé par** une unité de commande (30) adaptée pour recevoir un signal d'urgence émis par un utilisateur ou un capteur, en particulier un détecteur de fumée ou un détecteur d'incendie, dans lequel l'unité de commande est adaptée pour activer ladite soupape de commutation (50) suite à la réception dudit signal d'urgence pour commuter dans un état, dans lequel l'air pressurisé est fourni au masque à oxygène.

2. Dispositif de respiration d'oxygène selon la revendication 1, **caractérisé par** une unité de commande (30) adaptée pour recevoir un signal de vérification de prévol émis par un utilisateur du dispositif de respiration d'oxygène et pour activer la soupape de commutation (50) suite à la réception dudit signal de vérification de prévol pour commuter dans un état, dans lequel l'air pressurisé est fourni au masque à oxygène.

3. Dispositif de respiration d'oxygène selon la revendication 1 ou 2, **caractérisé par** une unité de commande (30) adaptée pour recevoir un signal de décompression d'urgence, en particulier un signal de décompression d'urgence fourni manuellement par un membre d'équipage d'un aéronef ou automatiquement par un capteur de pression de cabine et pour activer, suite à la réception dudit signal de décompression d'urgence, ledit dispositif d'ouverture (20) pour ouvrir ledit joint de ladite source d'oxygène pressurisé.

4. Dispositif de respiration d'oxygène selon l'une quelconque des revendications précédentes, **caractérisé en ce que** la source d'air pressurisé (53) est fournie par un cylindre à air pressurisé, une ligne d'alimentation en air d'appoint (53), un système de générateur d'oxygène embarqué, un système de générateur de gaz inerte embarqué ou un niveau de filtre de compresseur.

5. Dispositif de respiration d'oxygène selon l'une quelconque des revendications précédentes, **caractérisé par** une unité de commande (30) adaptée pour recevoir un signal d'un capteur de pression pour détecter l'altitude de vol d'un aéronef équipé dudit dispositif de respiration d'oxygène, l'unité de commande étant adaptée pour permettre uniquement l'activation de ladite soupape de commutation (50) si ledit signal dudit capteur de pression signale que l'aéronef a atteint ou excédé une certaine altitude.

6. Dispositif de respiration d'oxygène selon l'une quelconque des revendications précédentes, **caractérisé par** une soupape de purge (60) disposée dans la ligne d'alimentation d'oxygène entre la soupape de commutation (50) et le masque à oxygène (70), dans lequel la soupape de purge est adaptée pour commuter d'un premier état, dans lequel l'oxygène fourni via la ligne d'alimentation en oxygène est fourni audit masque à oxygène, à un second état, dans lequel l'oxygène fourni via la ligne d'alimentation en oxygène est fourni à ladite ligne de purge (63).

7. Dispositif de respiration d'oxygène selon l'une quelconque des revendications précédentes, **caractérisé par** une unité de commande adaptée pour activer ladite soupape de purge (60) afin de diriger le gaz fourni via la ligne d'alimentation en oxygène vers ladite ligne de purge (63).

8. Dispositif de respiration d'oxygène selon l'une quelconque des revendications précédentes, **caractérisé par** une unité de commande (30) adaptée pour recevoir un signal de décompression d'urgence et suite à la réception dudit signal de décompression d'urgence pour activer simultanément ledit dispositif d'ouverture (20) afin d'ouvrir ledit joint (11) de ladite source d'oxygène pressurisé (10), ladite soupape de commutation (50) afin de commuter dans un état, dans lequel l'oxygène fourni par ladite ligne d'alimentation en oxygène est fourni audit masque à oxygène (70), et ladite soupape de purge (60) pour fournir à la ligne de purge un gaz fourni à la soupape de purge, moyennant quoi l'unité de commande (30) est en outre adaptée pour recommuter ladite soupape de purge (60) après une période de temps prédéterminée dans un état, dans lequel du gaz fourni à la soupape de purge est fourni audit masque à oxygène.

9. Dispositif de respiration d'oxygène selon l'une quelconque des revendications précédentes, **caractérisé en ce que** le masque à oxygène est stocké dans une boîte ou sur un crochet, ladite boîte ou le crochet étant associé à un commutateur générant un signal déclencheur pour activer le flux d'oxygène si le masque à oxygène est retiré de la boîte ou du crochet.

10. Procédé pour fournir de l'oxygène à un passager ou un membre d'équipage d'un aéronef,
dans lequel l'oxygène est stocké dans une source d'oxygène pressurisé étanche et en cas d'urgence, ledit joint de ladite source d'oxygène est ouvert et de l'oxygène est fourni audit passager ou membre d'équipage via un masque à oxygène,
**caractérisé en ce que** suite à la réception d'un signal d'urgence émis par un utilisateur ou un capteur, en particulier un détecteur de fumée ou un détecteur d'incendie, de l'air pressurisé est fourni au masque à oxygène.

11. Procédé selon la revendication 10, **caractérisé en ce que** l'air pressurisé d'une source d'air pressurisé est fourni audit masque à oxygène dans une vérification de prévol.

12. Procédé selon la revendication 10 ou 11, **caractérisé en ce que** le joint de la source d'oxygène pressurisé est automatiquement ouvert par un dispositif d'ouverture suite à la réception d'un signal de décompression d'urgence.

13. Procédé selon l'une quelconque des revendications 10 à 12, **caractérisé en ce qu'**une ligne d'alimentation en oxygène fournissant de l'oxygène de la source d'oxygène pressurisé au masque à oxygène est purgée en oxygène pour une période de temps prédéternninée après que le joint de la source d'oxygène pressurisé a été ouvert.

14. Procédé selon l'une quelconque des revendications 10 à 13, **caractérisé en ce que** le flux d'oxygène au masque d'oxygène est activé par un signal déclencheur généré automatiquement lorsque le masque à oxygène est retiré d'une boîte ou d'un crochet.
